# EUROPEAN PATENT SPECIFICATION

(11) **EP 4 063 700 B1**
(45) Date of publication and mention of the grant of the patent: **20.08.2025**
(21) Application number: 20889414.7
(22) Date of filing: 05.11.2020
(51) Int. Cl.: F16K 31/06, F23K 5/00

(54) **GAS PROPORTIONAL VALVE**
GASPROPORTIONALVENTIL
SOUPAPE PROPORTIONNELLE À GAZ

(30) Priority: 21.11.2019 CN 201911144050
(43) Date of publication of application: 28.09.2022
(73) Proprietor: Zhejiang Sanhua Intelligent Controls Co., Ltd., Shaoxing, Zhejiang 312500 (CN)
(72) Inventor: FAN, Haoli, Shaoxing, Zhejiang 312500 (CN)
(74) Representative: Epping - Hermann - Fischer
(86) International application number: PCT/CN2020/126657
(87) International publication number: WO 2021/098522

(56) References cited:
- EP-A1- 2 573 438
- CN-A- 1 508 461
- CN-A- 105 020 457
- CN-A- 110 159 792
- CN-A- 110 307 375
- CN-U- 205 078 851
- CN-U- 205 078 888
- JP-A- S5 784 924
- TW-U- M 378 308

## Description

The present application claims the priority to Chinese Patent Application No. 201911144050.6, titled "GAS PROPORTIONAL VALVE", filed with the China National Intellectual Property Administration on November 21, 2019.

### FIELD

The invention relates to the technical field of gas control, in particular to a gas proportional valve.

### BACKGROUND

In order to prevent gas leakage, an existing gas proportional valve on the market generally uses at least two vale ports. The two valve ports are opened or closed by two independent solenoid valves. If one valve fails, the other valve can still close the valve port to ensure the use safety of the gas proportional valve. Document EP 2573438 A1 discloses a pilot-operated electromagnetic valve. The pilot-operated electromagnetic valve disclosed therein includes a plunger and a fixed iron core arranged in an axial direction so as to be movable relatively with each other, and also includes a solenoid to generate an electromagnetic force for moving the plunger integrally with a pilot valve. The electromagnetic valve further includes a stroke amplifying mechanism including a spring for stopping the pilot valve at a balanced position by exerting an elastic force, on the pilot valve, in an opposite direction to the electromagnetic suction force. The spring is largely deformable in comparison with the movement of the plunger caused by the electromagnetic suction force of the solenoid. The mechanism amplifies the stroke of a main valve such that a stop position of the main valve is dependent on the elastic deformation of the spring.

Document CN 205078888 U discloses a disconnected gas proportional valve of two -period form bitangent belonging to the gas equipment field. The gas proportional valve disclosed therein includes the main valve, still is connected with the flow divider on the main valve, the flow divider is passed through to get into behind the main valve in the gas, the gas reposition of redundant personnel that main valve entering flow divider will be flowed through to this flow divider is a plurality of tributaries to single control each tributary gas flow of flowing through, be equipped with simultaneously the disconnected formula trip valve of a single coil bitangent on the main valve.

### SUMMARY

A main object of the present application is to provide a gas proportional valve with a new structure, which can also realize that if one valve fails, another valve can still close the valve port.

A gas proportional valve is provided according to the present application, which includes a body, a first valve port, a second valve port and an electromagnetic driving device. The electromagnetic driving device includes a fixed iron core, a first sleeve portion, a first core body assembly, a second core body assembly, a first elastic member and a second elastic member. The first core body assembly includes a first movable iron core, a second sleeve portion and a first sealing portion. The second sleeve portion is fixedly connected or position-limitedly connected to the first movable iron core. A lower end of the second sleeve portion is fixedly connected or position-limitedly connected to the first sealing portion. The first elastic member abuts against the first sealing portion. The second core body assembly includes a second movable iron core and a second sealing portion. A lower end of the second movable iron core is fixedly connected or position-limitedly connected to the second sealing portion. A recess is defined on the first movable iron core and/or the second movable iron core. At least part of the second elastic member is located in the recess, one end of the second elastic member abuts against the first movable iron core, and another end of the second elastic member abuts against the second movable iron core.

When the electromagnetic driving device is energized, the first movable iron core is configured to move upward axially along a first sleeve wall of the first sleeve portion with the second sleeve portion and the first sealing portion, so that the first sealing portion moves away from the first valve port, the second movable iron core moves away from the second valve port with the second sealing portion, and the first movable iron core abuts against the second movable iron core, and the first movable iron core and the second movable iron core move close to the fixed iron core.

When the electromagnetic driving device is de-energized, the first sealing portion is configured to close the first valve port and the second sealing portion is configured to close the second valve port, a first spacing is formed between the first movable iron core and the second movable iron core, a second spacing is formed between the first movable iron core and a closed end of the first sleeve portion, and the first spacing is smaller than the second spacing.

The electromagnetic driving device of the gas proportional valve provided according to the present application includes the fixed iron core, the first sleeve portion, the first core body assembly, the second core body assembly, the first elastic member and the second elastic member. The first core body assembly includes the first movable iron core, the second sleeve portion and the first sealing portion. The first sealing portion is configured to close the first valve port. The second core body assembly includes the second movable iron core and the second sealing portion. The second sealing portion is configured to close the second valve port. If one of the core body assemblies fails to close the valve port, the other one of the core body assemblies can still close the valve port to ensure the use safety of the gas proportional valve.

### BRIEF DESCRIPTION OF THE DRAWINGS

FIG. 1 is a sectional view showing an overall structure of an electromagnetic driving device of a gas proportional valve provided according to the present application;
FIG. 2 is a sectional view showing an overall structure of the gas proportional valve provided according to the present application;
FIG. 3 is a sectional view showing an overall structure of a proportional regulating device of the gas proportional valve provided according to the present application; and

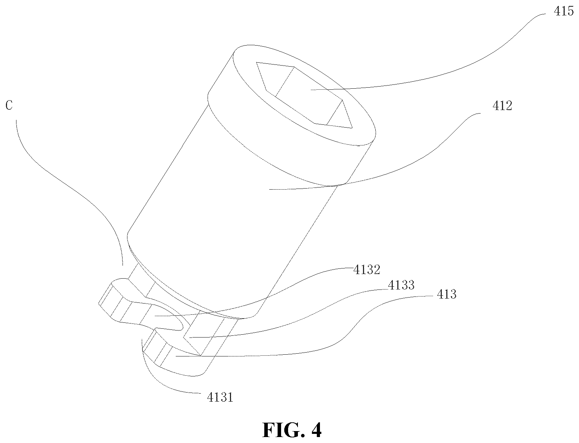

FIG. 4 is a schematic perspective view of the proportional regulating device of the gas proportional valve provided according to the present application.

### DETAILED DESCRIPTION OF THE EMBODIMENTS

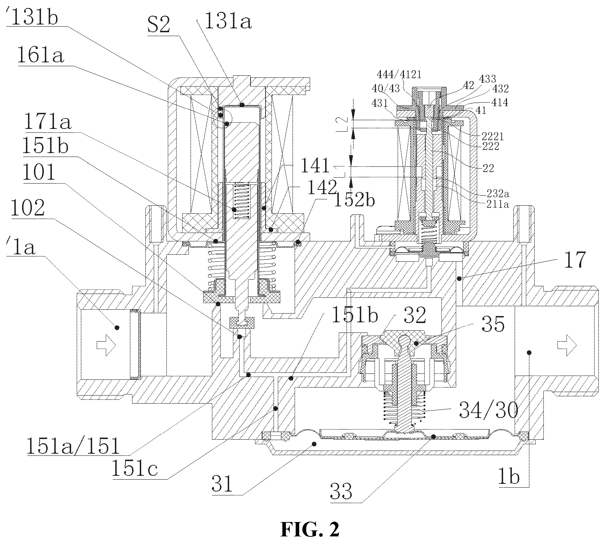

As shown in FIG. 2, a gas proportional valve includes a body 1, an inlet 1a and an outlet 1b. A gas main flow passage 1c is formed in the body 1. Gas flows in from the inlet 1a and flows out from the outlet 1b. The body 1 may be made of aluminum alloy by die-casting. A first valve port 101 and a second valve port 102 are defined on the body 1. The gas proportional valve further includes an electromagnetic driving device 10, and the electromagnetic driving device 10 is fixedly connected to the body 1.

The electromagnetic driving device 10 includes a fixed iron core 13, a first sleeve portion 15, a first core body assembly 16, a second core body assembly 17, a first elastic member 18 and a second elastic member 19, as well as a housing 11 and a coil component 12. The coil component 12 is located on an outer peripheral portion of the first sleeve portion 15, and the housing 11 substantially covers the coil component 12. The first core body assembly 16 is configured to move close to or away from the first valve port 101 to open or close it. The second core body assembly 17 is configured to move close to or away from the second valve port 102 to open or close it. In addition, if the first core body assembly 16 fails to close the first valve port 101, the second core body assembly 17 can still close the second valve port 102 to ensure the use safety of the gas proportional valve and prevent gas leakage. Through the optimization design of the electromagnetic driving device, two-stage core body assemblies are provided to control the valve ports respectively, so that the overall structure of the gas proportional valve becomes simpler while ensuring the use safety.

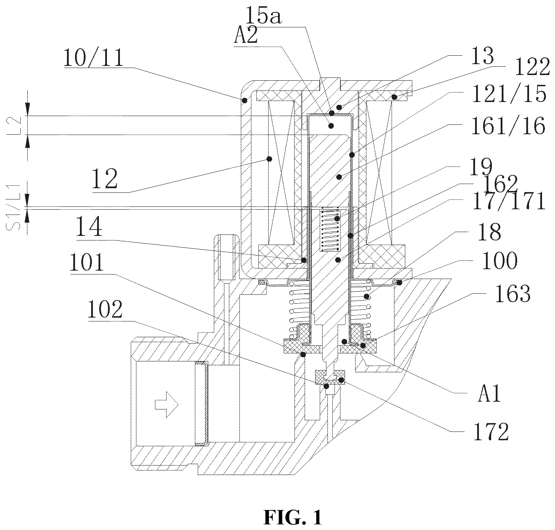

The structure of the electromagnetic driving device of the gas proportional valve provided according to the present application is described in detail below in combination with FIG. 1 and FIG. 2. The electromagnetic driving device 10 includes a fixed iron core 13, a first sleeve portion 15, a first core body assembly 16, a second core body assembly 17, a first elastic member 18 and a second elastic member 19, as well as a housing 11 and a coil component 12. The housing 11 has magnetic conductivity. The coil component 12 includes a frame 122. An inner hole 121 is substantially defined at the center of the coil component 12. At least part of the fixed iron core 13 is located in the inner hole 121, and the fixed iron core 13 may be fixedly connected to an upper portion of the housing 11 by crimping or welding, or position-limitedly connected to the upper portion of the housing 11 by dotting. In this embodiment, an opening is defined on the upper portion of the housing 11, and a protrusion corresponding to the opening is provided on the fixed iron core 13, which can be fixedly connected by crimping or welding. A recess portion 131 is further defined on the fixed iron core 13, which is substantially recessed toward the upper portion of the housing 11 and includes a bottom wall 131a and a side wall 131b. The first sleeve portion 15 has a substantially cylindrical structure with one closed end and one open end. At least part of the first sleeve portion 15, that is, a cylindrical main body portion of the first sleeve portion 15 is located in the inner hole 121. The first sleeve portion 15 includes a closed end 15a and an open end 15b. The open end 15b includes an extension portion 151b extending circumferentially. A part of the extension portion 151b is relatively close to a second sleeve portion 162 of the first core body assembly 16, and another part of the extension portion 151b is relatively away from the second sleeve portion 162. The former part of the extension portion 151b is clamped between the housing 11 and the first elastic member 18, an upper end and a lower end of which respectively abut against the housing and the first elastic member; and the latter part of the extension portion 151b is clamped between the housing 11 and a sealing member 100, an upper end and a lower end of which respectively abut against the housing and the sealing member, so that the whole electromagnetic driving device is fixedly and sealingly connected to the body 1, preventing gas leakage. The closed end 15a is located in the recess portion 131, and the closed end 15a is relatively close to or abuts against the bottom wall 131a. The side wall 131b is relatively close to or abuts against a first sleeve wall 15c of the first sleeve portion 15. The first core body assembly 16 includes a first movable iron core 161, a second sleeve portion 162 and a first sealing portion 163. The first movable iron core 161 may be made of soft magnetic material, which is not magnetic when it is de-energized, and has a magnetic effect when it is energized. The first movable iron core 161 may be fixedly connected to the second sleeve portion 162 by welding, or the second sleeve portion may be position-limitedly connected to the first movable iron core by dotting on the second sleeve portion. Both the first sleeve portion 15 and the second sleeve portion 162 may be made of non-magnetic stainless steel material by stretching. A lower end of the second sleeve portion 162 is fixedly or position-limitedly connected to a second sealing portion 163. **In** this embodiment the two are position-limitedly connected. The second sealing portion 163 includes a cap-shaped metal member and a rubber member, and the cap-shaped metal member substantially covers the rubber member. **In** this embodiment, a flange of the second sleeve portion 162 is squeezed into the rubber member through the flexible deformation of the rubber member, forming a tight fit. Alternatively, the lower end of the second sleeve portion 162 may be extended for flanging to limit the first sealing portion 163, and the two are fixedly connected by welding. An upper end of the first elastic member 18 abuts against the extension portion 151b, and another end of the first elastic member 18 abuts against the first sealing portion 163. When the coil component is de-energized, the first sealing portion 163 can close the first valve port 101 by means of a valve sealing force of the first elastic member 18. The electromagnetic driving device further includes a first accommodating chamber A1 and a second accommodating chamber A2. The first sleeve portion 15 substantially defines the second accommodating chamber A2, and at least part of the first core body assembly 16 is configured to move axially up and down in the second accommodating chamber A2. When the coil component is energized, the first movable iron core 161 can move axially upward along the first sleeve wall 15c with the second sleeve portion 162 and the first sealing portion 163, so that the first sealing portion 163 moves relatively away from the first valve port 101, and a second movable iron core 171 moves away from the second valve port 102 with a second sealing portion 172. The second core body assembly 17 includes the second movable iron core 171 and the second sealing portion 172. The second movable iron core 171 may be made of soft magnetic material. The second movable iron core 171 includes a body portion 171a and a valve stem 172a. The second movable iron core 171 may have an integral structure, or the second movable iron core 171 may be formed by fixedly connecting the body portion 171a with the valve stem 172a after respective formation of the two. The first movable iron core 161, the second sleeve portion 162 and the first sealing portion 163 substantially define the first accommodating chamber A1. At least part of the second movable iron core 171 is located in the first accommodating chamber A1. The second movable iron core 171 can move close to or away from the second valve port 102 with the second sealing portion 172. The valve stem 172a includes a stem head 1721a, and the stem head 1721a is fixedly or position-limitedly connected to the second sealing portion 172. The second sealing portion 172 may be made of rubber, and the stem head is squeezed into it through the flexible deformation of the rubber, forming a tight fit. An opening is defined on the first sealing portion 163, and at least part of the valve stem 172a extends out of the opening. At least part of the second movable iron core 171 can move axially up and down along a second sleeve wall of the second sleeve portion 162 in the first accommodating chamber A1. The first sleeve portion 15 is sleeved on the first movable iron core 161 and at least part of an outer periphery of the second sleeve portion 162. When the coil component is de-energized, a first spacing L1, namely a first magnetic gap, is formed between the first movable iron core 161 and the second movable iron core 171. The first movable iron core 161 has an upper end surface 161a, a second spacing L2 is formed between the upper end surface 161a and the closed end 15a of the first sleeve portion 15, and the first spacing L1 is smaller than the second spacing L2. In this embodiment, a recess 171a is defined on the second movable iron core 171. At least part of the second elastic member 19 is located in the recess 171a, one end of the second elastic member 19 abuts against a bottom wall of the recess 171a, and another end of the second elastic member 19 abuts against an end surface of the first movable iron core 161. A recess may be defined on the first movable iron core 161, and in this case, one end of the second elastic member 19 abuts against a top wall of the recess, and another end of the second elastic member 19 abuts against an end surface of the second movable iron core 171. Alternatively, the recess may be defined on both the first movable iron core 161 and the second movable iron core 171; a part of the second elastic member 19 is located in the recess of the first movable iron core 161, and another part of the second elastic member 19 is located in the recess of the second movable iron core 171; and, one end of the second elastic member 19 abuts against the first movable iron core 161, and another end of the second elastic member 19 abuts against the second movable iron core 171.

The electromagnetic driving device 10 further includes a magnetic conductor 14. The magnetic conductor 14 is sleeved on an outer peripheral wall of the first sleeve portion 15. The magnetic conductor 14 includes a vertical portion 141 and a flange portion 142. The magnetic conductor 14 has a cap-shaped structure with an open top and an open bottom. In a longitudinal direction, the vertical portion 141 is clamped between the frame 122 and the first sleeve portion 15, an inner wall of the vertical portion 141 abuts against the outer peripheral wall of the first sleeve portion, and an outer wall of the vertical portion 141 abuts against the frame 122. In a lateral direction, the flange portion 142 is clamped between the frame 122 and the housing 11, an upper end of the flange portion 142 abuts against the frame 122 and a lower end of the flange portion 142 abuts against a lower portion of the housing 11. The magnetic conductor 14 abuts against the second movable iron core 171 through the first sleeve portion 15, and can transmit the magnetic force to the second movable iron core 171 when energized. In order to ensure better magnetic conductivity, the vertical portion 141 may be relatively long.

The operating principle of the electromagnetic driving device is described in detail below. As shown in FIG. 1 and FIG. 2, the electromagnetic driving device is in a valve-fully-closed position. At this time, the coil component 12 is de-energized, the first movable iron core 161 is relatively away from the fixed iron core 13, the second spacing L2 is formed between the upper end surface 161a of the first movable iron core 161 and the closed end 15a, the first valve port 101 is closed by the first sealing portion 163 under the valve sealing force of the first elastic member 18, the second valve port 102 is closed by the second sealing portion 172 under a valve sealing force of the second elastic member 19, and the first spacing L1, that is the first magnetic gap, is formed between the first movable iron core 161 and the second movable iron core 171. When the coil component 12 is switched to an energized state, affected by the electromagnetic force, the housing 11 with magnetic conductivity transmits part of magnetic force to the fixed iron core 13 through the upper portion of the housing 11, and another part of the magnetic force is transmitted to the magnetic conductor 14 and the second movable iron core 171 through the lower portion of the housing 11. A second magnetic gap S2 is formed between the upper end surface 161a of the first movable iron core 161 and the side wall 131b of the fixed iron core 13, and the first magnetic gap S1 is formed between a lower end surface of the first movable iron core 161 and the second movable iron core 171. The first movable iron core 161 is relatively in a suspended state, and the magnetic force concentrated in the second magnetic gap S2 is relatively small. Moreover, the first spacing L1 is smaller than the second spacing L2, the first magnetic gap S1 is relatively small, the magnetic conductor 14 can transmit more magnetic force to the second movable iron core 171 under the action of the magnetic conductor 14, and the magnetic force is mostly concentrated in the first magnetic gap S1 which is subjected to a strong magnetic force. The second movable iron core 171 overcomes a spring force of the second elastic member 19, and the first movable iron core 161 can preferentially attract the second movable iron core 171. After the first movable iron core 161 abuts against the second movable iron core 171, the first magnetic gap S1, that is the first spacing L1, is eliminated. At this time, the first movable iron core 161 and the second movable iron core 171 form a whole. Due to the elimination of the first magnetic gap S1, the magnetic conductor 14 can transmit more magnetic force to the first movable iron core 161, and the magnetic force concentrated in the second magnetic gap S2 gradually increases, so that the first movable iron core 161 and the second movable iron core 171 move together upward and close to the fixed iron core 13, and the second spacing L2 and the second magnetic gap S2 gradually decrease. During this operation, the first movable iron core 161 preferentially attracts the second movable iron core 171, the first magnetic gap S1 is eliminated after the two abut against each other, the second sealing portion 172 gradually moves away from the second valve port 102, and the second valve port 102 is preferentially opened. Thereafter, the first movable iron core 161 moves upward and close to the fixed iron core 13 with the second movable iron core 171, the second sleeve portion 162 and the first sealing portion 163, and the first valve port 101 is also opened, so that the first valve port 101 and the second valve port 102 are both opened, and the electromagnetic driving device is in a fully open state. When the coil component 12 is switched from the energized mode to the de-energized mode, the first movable iron core 161 begins to separate from the fixed iron core 13 as the magnetic force disappears, the second movable iron core 171 and the first movable iron core 161 from the original abutting state, the second movable iron core 171 closes with the first movable iron core 161, and the second movable iron core 171 closes the second valve port 102 under the elastic force of the second elastic member 19, that is, an elastic valve sealing force. Similarly, the first core body assembly 16 closes the first valve port 101 under the valve sealing force of the first elastic member 20. Specifically, due to the disappearance of the electromagnetic force and under the valve sealing force of the second elastic member 19, the second movable iron core 171 is separated from the first movable iron core 161, and the second movable iron core 171 moves downward with the second sealing portion 172 and closes the second valve port 102. In addition, due to the disappearance of the electromagnetic force and under the valve sealing force of the first elastic member 18, the first sealing portion 163 moves downward and closes the first valve port 101, and the first movable iron core 161 and the second sleeve portion 162 also move downward. It should be noted that in order to enable the first core body assembly 16 and the second core body assembly 17 to smoothly close the valve, the elastic force of the first elastic member 18 is set to be greater than the elastic force of the second elastic member 19. If the elastic force of the second elastic member 19 is greater than the elastic force of the first elastic member 18, the second elastic member 19 can push the first movable iron core 161 upward to separate the first movable iron core from the second movable iron core 171 in a valve closing state, so that the first sealing portion 163 cannot close the valve smoothly. If the elastic force of the second elastic member 19 is equal to the elastic force of the first elastic member 18, an upward separating force is applied to the first movable iron core 161, so that the first sealing portion 163 cannot close the valve well. In this structure, even if the first core body assembly 16 cannot move downward and smoothly close the valve, for example, if the first movable iron core 161 is stuck with the first sleeve portion 15, the second movable iron core can also be separated from the first movable iron core, move downward with the second sealing portion 172 and close the second valve port 102 under the elastic valve sealing force of the second elastic member 19. Or, if the second core body assembly 17 cannot move downward and smoothly close the second valve port 102, the first movable iron core 161 can also move downward with the second sleeve portion 162 and the first sealing portion 163, and close the first valve port 101 under the valve sealing force of the first elastic member 18, so as to ensure the use safety of the gas proportional valve and prevent gas leakage.

Through the optimization design of the electromagnetic driving device 10, there is only one layer of the first sleeve portion 15 between the fixed iron core 13 and the first movable iron core 161, which has a relatively small magnetic resistance. In addition, when the coil is energized, the second movable iron core 171 moves upward against the elastic force of the second elastic member 19. During the upward movement of the second movable iron core 171, the closer the second movable iron core 171 is to the first movable iron core 161, the greater the obtained electromagnetic force is under the magnetic field, and the greater the obtained acceleration is. When the first movable iron core 161 abuts against the second movable iron core 171, the acceleration and moving speed of the second movable iron core 171 may boost the first movable iron core 161, so that the first movable iron core 161 can open the first valve port 101 more smoothly with the second sleeve portion 162 and the first sealing portion 163, so as to realize the smooth valve opening of the first valve body assembly 16. In addition, under the boost of the second movable iron core 171, the force received by the first valve body assembly 16 during the valve opening may derive from the force of the first movable iron core 161 and the electromagnetic force of the coil component 12, the required electromagnetic force can be relatively reduced, which can reduce the amount of coil windings and thereby reduce the manufacturing cost.

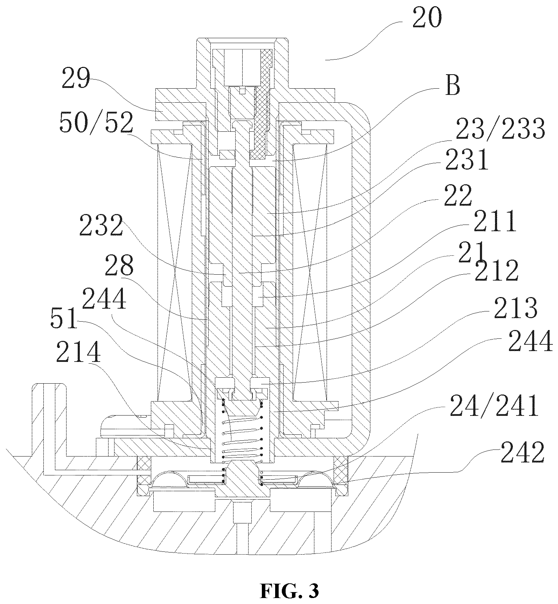

The specific structure of a proportional regulating device 20 is described in detail below with reference to FIG. 2 and FIG. 3. The proportional regulating device 20 includes an accommodating chamber B, a fixed iron core 21, a regulating valve stem 22, a movable iron core 23 and a diaphragm assembly 24. The movable iron core 23 is located in the accommodating chamber B. The regulating valve stem 22 made of metal material may be fixedly connected to or be integrated with the movable iron core. The proportional regulating device further includes a sleeve 28, a housing member 29 and a coil component. The coil component is located on an outer peripheral portion of the fixed iron core 21, the housing member 29 has magnetic conductivity and substantially surrounds the coil component, the sleeve 28 is fixedly or position-limitedly connected to the fixed iron core 21, and the sleeve 28 and the fixed iron core 21 substantially define the accommodating chamber B. The movable iron core 23 can move axially up and down with the regulating valve stem 22 along a sleeve wall of the sleeve 28 in the accommodating chamber B. The movable iron core 23 is located above the fixed iron core 21 in an inverted " 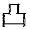 " shape. The fixed iron core 21 is relatively close to the diaphragm assembly 24. Excited when the coil component is energized, the whole movable iron core 23 moves downward and gradually close to the fixed iron core 21, and the regulating valve stem 22 moves downward with the movable iron core 23. The excitation disappears when the coil component is de-energized, the whole movable iron core 23 moves upward and gradually away from the fixed iron core 21, and the regulating valve stem 22 moves upward with the movable iron core 23. Specifically, the regulating valve stem 22 includes a body portion, an upper end portion 222 and a lower end portion. The fixed iron core 21 includes a first recess portion 211, a first through hole 212 and a second recess portion 213. The first recess portion 211 is located at an upper position of the fixed iron core 21, the second recess portion 213 is located at a lower position of the fixed iron core 21, and the first through hole 212 can communicate the first recess portion 211 with the second recess portion 213. The movable iron core 23 includes a second through hole 231 and a protruding portion 232. The protruding portion 232 is a small-diameter portion with a smaller diameter than a large-diameter portion 233 of the movable iron core 23, and the protruding portion 232 cooperates with the first recess portion 211. Excited when the coil component is energized, the movable iron core 23 moves downward together with the regulating valve stem 22 to attract the fixed iron core 21, and the protruding portion 232 extends into the first recess portion 211. The excitation disappears when the coil component is de-energized, the movable iron core 23 moves upward with the regulating valve stem 22 away from the fixed iron core 21, and the protruding portion 232 moves relatively away from the first recess portion 211. An outer peripheral wall of the large-diameter portion 233 of the movable iron core 23 can move axially along the sleeve wall in the accommodating chamber B. The first through hole 212 is arranged coaxially with the second through hole 231, and the regulating valve stem 22 can pass through the second through hole 231, the first recess portion 211, the first through hole 212 and the second recess portion 213 from top to bottom in a listed sequence. At least part of the body portion 221 is located in the first through hole 212 and the second through hole 231, and the lower end portion 223 is located in the second recess portion 213. The fixed iron core 21 further includes a lower end 214, and the lower end 214 is fixedly connected to the housing member 29. The diaphragm assembly 24 includes a sealing portion 241, a diaphragm 242, a spring seat 243 and a spring 244. The lower end portion of the regulating valve stem 22 is fixedly or position-limitedly connected to the diaphragm assembly 24. In this embodiment the two are position-limitedly connected. The lower end portion of the regulating valve stem 22 is embedded in the spring seat to form a tight fit. The spring seat 243 may be made of flexible rubber material, and the lower end portion 223 of the regulating valve stem 22 is tightly connected to the spring seat 243 through flexible deformation. In addition, the lower end portion of the regulating valve stem 22 may be fixedly connected to the diaphragm assembly through interference fit. The spring 244 is sleeved on a protrusion of the sealing portion 214, and one end of the spring 244 abuts against the spring seat, and another end of the spring 244 abuts against the sealing portion 214. The spring seat and at least part of the spring 244 are located in the second recess portion 211. The proportional regulating device 20 further includes a regulating mechanism 40. The regulating mechanism 40 includes a body portion 41, a limiting regulating rod 42 and an accommodating portion 43. In this embodiment, the body portion and the accommodating portion are made of plastic and integrated as a whole. The limiting regulating rod is made of metal, and the body portion or the accommodating portion may be made of metal according to actual needs. The materials of members of the regulating mechanism are not specifically limited here. The accommodating portion 43 is fixedly or position-limitedly connected to the housing member 29. The accommodating portion 43 includes an extension portion 431, a flange portion 432 and an accommodating hole 433. An upper end and a lower end of the accommodating portion 43 both are open. An interior of the accommodating portion 43 further includes an accommodating hole wall, and a first threaded portion 444 cooperating with the body portion 41 is formed on the accommodating hole wall. Specifically, the extension portion 431 may be in an interference fit with the sleeve 28. The flange portion 432 abuts against an outer wall of the housing member 29 so that the whole accommodating portion 43 can be fixedly or position-limitedly connected to the housing member 29. Or, a screw hole is respectively defined on the flange portion 432 and the housing member 29, and the flange portion 432 is fixedly connected to the housing member 29 by screw tightening. Or a protrusion or a recess is provided on a bottom surface of the flange portion 432, a corresponding recess or protrusion is provided on a surface of the housing member 29, and the two are position-limitedly connected through the cooperation of the protrusion and recess, as long as the whole accommodating portion is fixed to the housing member 29. The body portion 41 is at least partially located in the accommodating hole 433, and an upper end of the body portion 41 may be extended to an outside of the accommodating hole 433 if necessary. The body portion 41 may be made of plastic or metal by integrally processing, and a second threaded portion 4121 screwed to the first threaded portion 444 is provided on an outer wall of the body portion 41. The whole body portion 41 has a cylindrical structure, which includes a sleeve body 412, a claw portion 413, a body accommodating chamber 414 and a cooperating portion 415. The claw portion 413 extends downward and protrudes from the sleeve body 412. The body accommodating chamber 414 includes a notch C. Specifically, the substantially semi-circular notch C is formed between the sleeve body 412 and the claw portion 413. The second threaded portion 4121 is provided on an outer peripheral wall of the cylindrical sleeve body 412. The whole claw portion 413 has a C-shaped opening structure, and the claw portion 413 includes an opening 4131, a claw hole 4132 and a claw surface 4133. The upper end portion 222 of the regulating valve stem 22 is inserted into and cooperates with the claw hole 4131 through the opening 4131, and can extend into the body accommodating chamber 414 through the notch C. The claw surface 4133 can form a limit for downward movement of the movable iron core 23 through the cooperation with an upper end flange portion 2221 of the upper end portion 222. A distance L1 is formed between a first recessed bottom surface 211a of the fixed iron core 21 and a protruding bottom surface 232a of the movable iron core 23, a distance L2 is formed between the claw surface 4133 and the upper end flange portion 2221, and L1 is greater than L2. The regulating valve stem 22 and the opening 4131 can move axially up and down with the movable iron core 23 through a clearance fit. The cooperating portion 415 has a cooperating hole structure with an inner hexagon, which can cooperate with an external L-shaped Allen wrench. The body accommodating chamber 414 penetrates through the cooperating hole. The body portion 41 moves upward or downward relative to the accommodating portion 43 through the thread cooperation of the first threaded portion 444 and the second threaded portion 4121. It should be noted that the cooperating hole structure of the cooperating portion may also be of other polygonal or irregular structure, as long as it can be used together with an external wrench so that the body portion can move upward or downward relative to the accommodating portion.

When the members of the proportional regulating device 20 are assembled, the body portion 41 and the limiting regulating rod 42 of the regulating mechanism 40 may be first mounted, or the movable iron core 23 is first fixedly connected to or integrated with the regulating valve stem 22 to form a movable iron core valve stem assembly, and the upper end portion of the regulating valve stem 22 is then placed from the opening 4131 on a side portion of the claw portion 413, and then the whole is placed into the accommodating chamber B, and the regulating valve stem 22 is aligned with the first through hole 212, and the various members of the diaphragm assembly 24 are mounted in turn. The regulating valve stem 22 is reset by the spring 244, so that the upper end flange portion 2221 can abut against the limiting regulating rod 42. A third threaded portion 4122 cooperating with the limiting regulating rod 42 is provided on an inner peripheral wall of the sleeve body 412. At least the limiting regulating rod 42 is located in body accommodating chamber 414, and a lower end of the limiting regulating rod 42 may extend into a chamber of the notch C, as long as it can abut against the regulating valve stem 22 in the energized state. A fourth threaded portion 421 is provided on an outer peripheral wall of the limiting regulating rod 42, a groove portion with a substantially strip shape is defined on an upper end portion of the limiting regulating rod 42, the groove portion cooperates with a slotted screwdriver through the thread operation of the third threaded portion 4122 and the fourth threaded portion 421, so that the limiting regulating rod 42 moves upward or downward relative to the sleeve body 412. It should be noted that a groove with other shape may also be defined on the upper end portion of the limiting regulating rod to cooperate with an external tool, as long as the limiting regulating rod can move upward or downward relative to the sleeve body.

The proportional regulating device 20 further includes a magnetic conductive assembly 50. The magnetic conductive assembly 50 includes a first magnetic conductive portion 51 and a second magnetic conductive portion 52. The first magnetic conductive portion 51 is sleeved on the outer peripheral portion of the fixed iron core 21 and abuts against the fixed iron core 21; and the second magnetic conductive portion 52 is sleeved on an outer peripheral portion of the sleeve 28 and abuts against the sleeve 28. The first magnetic conductive portion 51 includes a first straight segment and a first flange segment. The second magnetic conductive portion 52 includes a second straight segment and a second flange segment. The first straight segment abuts against the outer peripheral portion of the fixed iron core 21, the first flange segment respectively abuts against the frame of the coil component and the lower portion of the housing member 29. The second straight segment abuts against the outer peripheral portion of the sleeve 28, the movable iron core 23 abuts against at least part of the second straight segment through the sleeve 28, and the second flange segment respectively abuts against the frame of the coil component and the upper portion of the housing member 29. By energizing the proportional regulating device and under the excitation, the magnetic force generated by the coil component is transmitted to the whole housing member 29, the lower end 214 of the fixed iron core 21 is fixedly connected to the housing member 29, that is, the fixed iron core and the housing member have a certain magnetic conductive area, and the magnetic force can be transmitted to the fixed iron core. By providing the first magnetic conductive portion 51, the area of the magnetic conductive assembly cooperating with the fixed iron core 21 is increased, which can further enhance the magnetic force. Another part of the magnetic force is transmitted to the second magnetic conductive portion 52 through the upper portion of the housing member 29, at least part of the second straight segment indirectly abuts against the movable iron core 23, and the magnetic force can be transmitted to the movable iron core 23 through the contact area between the second straight segment and the movable iron core 23, so that the movable iron core 23 is attracted by the fixed iron core 21 to operate the product. By proving the magnetic conductive assembly, the magnetic conductivity of the proportional regulating device is enhanced when the whole proportional regulating device is operated. In addition, in order to enhance the magnetic conductivity of the proportional regulating device, the whole regulating mechanism 40 may be moved upward to the outside of the housing member 29, as long as the regulating mechanism 40 does not depart from the whole product. When the movable iron core 23 and the regulating valve stem 22 move upward axially together, they can form magnetic conduction by contacting with the upper opening of the housing member 29.

The operating principle of the proportional regulating device 20 cooperating with the electromagnetic driving device 10 and a differential pressure regulating device 30 to realize high-pressure and low-pressure outlet pressure regulation modes of the gas proportional valve, is described in detail hereinafter. The gas enters from the inlet 1a of the gas proportional valve, the electromagnetic driving device 10 controls a gas safety switch of the gas proportional valve, the first valve port 101 is opened by the first core body assembly 16 of the electromagnetic driving device 10, and the second valve port 102 is opened by the second core body assembly 17. The gas enters the main flow passage 1c through the first valve port 101 and the second valve port 102. In a case that the high-pressure outlet pressure regulation mode needs to be realized, the proportional regulating device is energized, the coil component is energized and excited, the regulating valve stem 22 moves downward and close to the fixed iron core 21 with the movable iron core 23, the regulating valve stem 22 gradually moves away from the limiting regulating rod 42, the protruding portion 232 gradually extends into the first recess portion 211, the regulating valve stem 22 exerts a force on the spring 244 through the spring seat 243, the spring 244 is pressed to move close to the third valve port 103 with the sealing portion 241, an opening degree of the third valve port 103 decreases accordingly, a pressure in the flow passage 151 gradually increases, a pressure in a back pressure chamber 31 of the differential pressure regulating device 30 also increases, a differential pressure diaphragm 33 overcomes the spring force of a main valve spring 34 to push a differential pressure valve stem so that a main valve sealing portion 35 is pushed to move away from a main valve port 32, an opening degree of the main valve port 32 gradually increases, a flow rate of gas flowing from the main valve port 32 to the outlet 1b increases, and finally a flow rate of gas flowing to an external combustion chamber increases, which realizes a relatively high outlet pressure regulation mode of the gas proportional valve. The pressure set under the high-pressure outlet pressure regulation mode used by the customer in use is generally 900pa. In a case that the customer needs a pressure higher or lower than the set pressure to further regulate of the flow rate of gas according to actual needs, it can be realized by the cooperation between the regulating valve rod 42 and the body portion 41, specifically by the cooperation between the claw surface 4133 and the upper end flange portion 2221 of the upper end portion 222. For example, if the stroke of L1 is 1 and the stroke of L2 is 0.8, the regulating valve stem 22 moves downward and close to the fixed iron core 21 with the movable iron core 23 when the coil component is energized and excited, the upper end flange portion 2221 of the regulating valve stem 22 is separated from the limiting regulating rod 42 from the abutting state, and the protruding portion 232 gradually extends into the first recess portion 211, the protruding portion 232 does not completely abut against the first recess portion 211 due to the difference in stroke, and the upper end flange portion 2221 abuts against the claw surface 4133, so as to prevent the movable iron core 23 from further moving downward. In a case that the customer further regulates the gas under the high-pressure outlet pressure mode to increase the flow rate of gas to achieve a higher pressure regulation mode according to actual needs of the system and other occasions, the Allen wrench can be passed through the opening at the upper end of the accommodating portion 43 and be aligned with the cooperating hole for operation. The whole body portion 41 moves downward relative to the accommodating portion 43 through the thread cooperation of the first threaded portion 444 and the second threaded portion 4121, the claw portion 413 extends from the accommodating hole 433, the regulating valve stem 22 moves downward with the movable iron core 23 under the electromagnetic force, the protruding portion 232 further extends into the first recess portion 211, the regulating valve stem 22 further presses on the spring 244 through the spring seat 243, the spring 244 is pressed to move further close to the third valve port 103 with the sealing portion 241, the opening degree of the third valve port 103 decreases accordingly, the pressure in the flow passage 151 gradually increases, the pressure in the back pressure chamber 31 of the differential pressure regulating device 30 also increases, the differential pressure diaphragm 33 overcomes the spring force of the main valve spring 34 to push the differential pressure valve stem so that the main valve sealing portion 35 is pushed to move away from the main valve port 32, the opening degree of the main valve port 32 gradually increases, the flow rate of gas flowing from the main valve port 32 to the outlet 1b increases, and finally the flow rate of gas flowing to the external combustion chamber further increases accordingly, which further regulates the flow rate of gas under the high-pressure outlet pressure regulation mode of the gas proportional valve, so as to achieve a higher pressure regulation mode. Conversely, in a case that the customer further regulates the gas under the high-pressure outlet pressure mode to reduce the flow rate of gas to achieve a relatively low-pressure regulation mode under the high-pressure outlet pressure regulation mode according to actual needs of the system and other occasions, the Allen wrench can be passed through the opening at the upper end of the accommodating portion 43 and be aligned with the cooperating hole for operation. The whole body portion 41 moves upward relative to the accommodating portion 43 through the thread cooperation of the first threaded portion 444 and the second threaded portion 4121, the claw surface 4133 of the claw portion 413 abuts against the upper end flange portion, the body portion 41 moves upward together with the regulating valve stem 22, and the force received by the spring seat 243 and the spring 244 is weakened. The sealing portion 241 moves relatively away from the third valve port 103 under the pressure, the opening degree of the third valve port 103 increases accordingly, part of the gas flows from a pressure relief passage 17 to the outlet 1b, the pressure in the flow passage 151 gradually decreases, the pressure in the back pressure chamber 31 of the differential pressure regulating device 30 also decreases, the main valve sealing portion 35 moves close to the main valve port 32, the opening degree of the main valve port 32 gradually decreases, the flow rate of gas from the main valve port 32 to the outlet 1b decreases, and finally the flow rate of gas to the external combustion chamber decreases, which further regulates the flow rate of gas under the high-pressure outlet pressure regulation mode of the gas proportional valve, so as to achieve a relatively low-pressure outlet pressure regulation mode.

In a case that the low-pressure outlet pressure regulation mode of the gas proportional valve needs to be realized, the proportional regulating device is de-energized, the electromagnetic force disappears, the regulating valve stem 22 moves relatively away from the fixed iron core 21 with the movable iron core 23, the protruding portion 232 moves gradually away from the first recess portion 211, the upper end flange portion 2221 of the regulating valve stem 22 remains abutting against the limiting regulating valve rod 42 under the action of the spring 244, the force received by the spring seat 243 and the spring 244 is weakened, the sealing portion 241 moves relatively away from the third valve port 103, the opening degree of the third valve port 103 increases accordingly, part of the gas flows from the pressure relief passage 17 to the outlet 1b, the pressure in the flow passage 151 gradually decreases, the pressure in the back pressure chamber 31 of the differential pressure regulating device 30 also decreases, the opening degree of the main valve port 32 decreases, the flow rate of gas from the main valve port 32 to the outlet 1b decreases, and finally the flow rate of gas to the external combustion chamber decreases, which realizes the low-pressure outlet pressure regulation mode of the gas proportional valve. The pressure set under the lower-pressure outlet pressure regulation mode used by the customer in use is generally 450pa. In a case that the customer needs a pressure higher or lower than the set pressure to further regulate of the flow rate of gas according to actual needs, the slotted screwdriver can be passed through the opening at the upper end of the accommodating portion and the cooperating hole of the cooperating portion to cooperate with the groove portion of the limiting regulating rod 42, so that the limiting regulating rod 42 moves upward or downward relative to the sleeve body 412. In a case that the flow rate of gas needs to be increased under the low-pressure outlet pressure regulation mode to achieve a relatively high-pressure regulation mode under the low-pressure outlet pressure regulation mode according to the system needs, the groove portion can cooperate with the external slotted screwdriver, so that the limiting regulating rod 42 moves downward relative to the sleeve body 412 through the thread cooperation of the third threaded portion 4122 and the fourth threaded portion 421, the limiting regulating rod 42 moves downward against the regulating valve stem 22, the regulating valve stem 22 moves downward further close to the fixed iron core 21 with the movable iron core 23, and the flow rate of gas increases so as to realize a relatively high-pressure outlet pressure regulation mode, which has been described above and will not be repeated here. Finally, the flow rate of gas to the external combustion chamber increases, which realizes the increase regulation of the flow rate of gas under the low-pressure outlet pressure regulation mode of the gas proportional valve, so as to achieve a higher pressure regulation mode. Conversely, in a case that the flow rate of gas needs to be reduced under the low-pressure outlet pressure regulation mode to achieve a relatively lower-pressure outlet pressure regulation mode under the low-pressure outlet pressure regulation mode according to the system needs, the groove portion can cooperate with the external slotted screwdriver, so that the limiting regulating rod 42 moves upward relative to the sleeve body 412 through the thread cooperation of the third threaded portion 4122 and the fourth threaded portion 421, the regulating valve stem 22 moves upward with the movable iron core 23 under the action of the spring 244 to keep abutting against the limiting regulating rod 42, the force received by the spring seat 243 and the spring 244 is weakened, the diaphragm assembly 24 moves relatively away from the third port 103, and the flow rate of gas decreases so as to realize a relatively lower-pressure outlet pressure regulation mode, which has been described above and will not be repeated here. Finally, the flow rate of gas to the external combustion chamber decreases accordingly, which realizes the decrease regulation of the flow rate of gas under the low-pressure outlet pressure regulation mode of the gas proportional valve, so as to achieve a lower pressure outlet pressure regulation mode.

It should be noted that, the flow passage 151 stated herein includes a first flow passage 151a, a second flow passage 151b and a third flow passage 151c. The first flow passage 151a, the second flow passage 151b and the third flow passage 151c are in communication with each other. The gas enters the flow passage 151 through the first valve port 101 and the second valve port 102, the increase or decrease of the opening degree of the third valve port 103 can directly affect the pressure change in the flow passage 151, the first flow passage 151a is relatively close to the electromagnetic driving device 10 and one end of the first flow passage 151a is in communication with the second valve port 102, one end of the second flow passage 151b is in communication with the third valve port, the third flow passage 151c is relatively close to the differential pressure regulating device 30 and one end of the third flow passage 151c is in communication with the back pressure chamber 31, and the electromagnetic driving device 10, the proportional regulating device 20 and the differential pressure regulating device 30 are communicated through the flow passage 151. The gas proportional valve provided according to the present application can realize the high-pressure or low-pressure outlet pressure regulation mode of the gas proportional valve by providing the electromagnetic driving device 10, the proportional regulating device 20 and the differential pressure regulating device 30 and by mutual cooperation.

When the proportional regulating device of the gas proportional valve is connected to a direct current constant current power supply, the outlet pressure of the valve body can be proportionally and linearly regulated. A primary pressure, that is, a gas inlet pressure which can also be represented by P1, is input at the gas inlet, I represents the current, and P2 represents a secondary pressure, that is, an outlet pressure. The input power supply of the proportional regulating device is in direct proportion to the outlet pressure of the valve body, that is, the smaller the current is, the smaller the compression force of the movable iron core 23 on the diaphragm assembly through the spring is, and the smaller the opening degree of the main valve port 32 is; and the larger the current is, the larger the opening degree of the main valve port 32 is. The proportional linear regulation of the outlet pressure of the gas proportional valve can be realized by controlling the linearity of the input current of the proportional regulating device.

It should be noted that, the gas proportional valve provided according to the present application focuses on protecting the structure of the electromagnetic driving device, and the arrangement of the electromagnetic driving device used in other structure can be flexibly adapted according to actual market needs.

In the gas proportional valve provided according to the present application, the opening and closing of the two valve ports can be controlled by one electromagnetic coil through the optimization design of the electromagnetic driving device, which reduces the manufacturing cost of the valve body. In addition, as an important safety solenoid valve structure for controlling on and off of the gas, the electromagnetic driving device can reduce the number of the parts by providing the two-stage control mode of the first core body assembly and the second core body assembly, so that the gas proportional valve has a simpler structure, and the manufacturing cost of the product is reduced. In addition, if one of the core body assembles fails, the other one of the core body assembles can still close the valve port to prevent the gas leakage and ensure the use safety.

It should be noted that the ordinal numerals such as "first" and "second" and the orientation words such as "up" and "down" mentioned herein are all described based on the drawings of the specification, and are only used to distinguish different parts, and should not be considered as a limitation on the sequence of the parts. The above embodiments are only preferred embodiments of the present application. It should be noted that, for those skilled in the art, other improvements and modifications may be further made without departing from the present invention as defined by the claims.

## Claims

1. A gas proportional valve, comprising a body (1), a first valve port (101), a second valve port (102) and an electromagnetic driving device (10), wherein the electromagnetic driving device (10) comprises a fixed iron core (13), a first sleeve portion (15), a first core body assembly (16), a second core body assembly (17), a first elastic member (18) and a second elastic member (19);
wherein the first core body assembly (16) comprises a first movable iron core (161), a second sleeve portion (162) and a first sealing portion (163); the second sleeve portion (162) is fixedly or position-limitedly connected to the first movable iron core (161); a lower end of the second sleeve portion (162) is fixedly or position-limitedly connected to the first sealing portion (163), the first elastic member (18) abuts against the first sealing portion (163), the second core body assembly (17) comprises a second movable iron core (171) and a second sealing portion (172); a lower end of the second movable iron core (171) is fixedly or position-limitedly connected to the second sealing portion (172); a recess (171a) is defined on the first movable iron core (161) and/or the second movable iron core (171); at least part of the second elastic member (19) is located in the recess (171a), one end of the second elastic member (19) abuts against the first movable iron core (161), and another end of the second elastic member (19) abuts against the second movable iron core (171);
when the electromagnetic driving device (10) is energized, the first movable iron core (161) is configured to move upward axially along a first sleeve wall (15c) of the first sleeve portion (15) with the second sleeve portion (162) and the first sealing portion (163), so that the first sealing portion (163) moves away from the first valve port (101), the second movable iron core (171) moves away from the second valve port (102) with the second sealing portion (172), and the first movable iron core (161) abuts against the second movable iron core (171), and the first movable iron core (161) and the second movable iron core (171) move close to the fixed iron core (13); and
when the electromagnetic driving device (10) is de-energized, the first sealing portion (163) is configured to close the first valve port (101) and the second sealing portion (172) is configured to close the second valve port (102), a first spacing (L1) is formed between the first movable iron core (161) and the second movable iron core (171), a second spacing (L2) is formed between the first movable iron core (161) and a closed end (15a) of the first sleeve portion (15), and the first spacing (L1) is smaller than the second spacing (L2).

2. The gas proportional valve according to claim 1, wherein the electromagnetic driving device (10) further comprises a magnetic conductor (14); the magnetic conductor (14) is sleeved on an outer peripheral wall of the first sleeve portion (15), the magnetic conductor (14) comprises a vertical portion (141) and a flange portion (142), the gas proportional valve further comprises a housing (11) and a coil component (12), the coil component (12) comprises a frame (122), an inner wall of the vertical portion (141) abuts against the outer peripheral wall, an outer wall of the vertical portion (141) abuts against the frame (122), the flange portion (142) is clamped between the frame (122) and the housing (11), an upper end of the flange portion (142) abuts against the frame (122), and a lower end of the flange portion (142) abuts against a lower portion of the housing (11).

3. The gas proportional valve according to claim 1, wherein the electromagnetic driving device (10) further comprises a second accommodating chamber (A2), the first sleeve portion (15) substantially defines the second accommodating chamber (A2), and at least part of the first core body assembly (16) is configured to move axially up and down along a first sleeve wall (15c) in the second accommodating chamber (A2), the first movable iron core (161), the second sleeve portion (162) and the first sealing portion (163) substantially define the first accommodating chamber (A1), at least part of the second movable iron core (171) is located in the first accommodating chamber (A1), and is configured to move axially up and down along a second sleeve wall of the second sleeve portion (162).

4. The gas proportional valve according to claim 3, wherein the second movable iron core (171) comprises a body portion (171a) and a valve stem (172a), the body portion (171a) is integrated with the valve stem (172a) or the body portion (171a) is fixedly connected to the valve stem (172a), the first sealing portion (163) comprises an opening, at least part of the valve stem (172a) extends outward from the opening, the valve stem (172a) comprises a stem head (1721a), and the stem head (1721a) is fixedly or position-limitedly connected to the second sealing portion (172).

5. The gas proportional valve according to claim 3, wherein the first sleeve portion (15) comprises the closed end (15a) and an open end (15b), an extension portion (151b) is provided at the open end (15b), the electromagnetic driving device (10) further comprises further comprises a housing (11), a coil component (12) and a sealing member, an inner hole (121) is defined on the coil component (12), at least part of the first sleeve portion (15) is located in the inner hole (121) and the first sleeve wall (15c) is sleeved on the first movable iron core (161) and at least part of an outer peripheral wall of the second sleeve portion (162), a part of the extension portion (151b) relatively close to the second sleeve portion (162) is clamped between the housing (11) and the first elastic member (18), and an upper end of the part abuts against the housing (11) and a lower end of the part abuts against the first elastic member (18), another part of the extension portion (151b) relatively away from the second sleeve portion (162) is clamped between the housing (11) and the sealing member, and an upper end of the another part abuts against the housing (11) and a lower end of the another part abuts against the sealing member.

6. The gas proportional valve according to claim 1, wherein an elastic force of the first elastic member (18) is greater than an elastic force of the second elastic member (19).

7. The gas proportional valve according to any one of claims 1 to 6, wherein the gas proportional valve further comprises a housing (11) and a coil component (12), an inner hole (121) is defined on the coil component (12), at least part of the fixed iron core (13) is located in the inner hole (121), the fixed iron core (13) is relatively close to an upper portion of the housing (11), the fixed iron core (13) is fixedly or position-limitedly connected to the housing (11), the fixed iron core (13) comprises a recess portion (131), the recess portion (131) comprises a bottom wall (131a) and a side wall (131b), the closed end (15a) is located in the recess portion (131) and the closed end (15a) is relatively close to or abuts against the bottom wall (131a), and the side wall (131b) is relatively close to or abuts against the first sleeve wall (15c).

8. The gas proportional valve according to any one of claims 1 to 6, wherein the first movable iron core (161) and the second movable iron core (171) are made of soft magnetic material.

9. The gas proportional valve according to any one of claims 1 to 6, wherein the gas proportional valve further comprises a proportional regulating device (20) and a differential pressure regulating device (30), the proportional regulating device (20) comprises a housing member (29), a fixed iron core (21), a movable iron core (23), a regulating valve stem (22) and a diaphragm assembly (24), the movable iron core (23) is located above the fixed iron core (21), a lower end of the regulating valve stem (22) is fixedly or position-limitedly connected to the diaphragm assembly (24), the regulating valve stem (22) is fixedly connected to or integrated with the movable iron core (23), the movable iron core (23) is configured to move close to or away from the fixed iron core (21) with the regulating valve stem (22), the proportional regulating device (20) further comprises a regulating mechanism (40), the gas proportional valve further comprises a third valve port (103), and the diaphragm assembly (24) is configured to move close to or away from the third valve port (103).

10. The gas proportional valve according to claim 9, wherein a flow passage (151) is defined in the body (1), the flow passage (151) comprises a first flow passage (151a), a second flow passage (151b) and a third flow passage (151c), the first flow passage (151a) is close to the electromagnetic driving device (10), one end of the first flow passage (151a) is in communication with the second valve port (102), one end of the second flow passage (151b) is in communication with the third valve port (103), the third flow passage (151c) is close to the differential pressure regulating device (30), one end of the third flow passage (151c) is in communication with a back pressure chamber (31) of the differential pressure regulating device (30), and the first flow passage (151a), the second flow passage (151b) and the third flow passage (151c) are in communication with each other.

## Patentansprüche

1. Gasproportionalventil, das einen Körper (1), eine erste Ventilöffnung (101), eine zweite Ventilöffnung (102) und eine elektromagnetische Antriebsvorrichtung (10) aufweist, wobei die elektromagnetische Antriebsvorrichtung (10) einen feststehenden Eisenkern (13), einen ersten Hülsenabschnitt (15), eine erste Kernkörperbaugruppe (16), eine zweite Kernkörperbaugruppe (17), ein erstes elastisches Element (18) und ein zweites elastisches Element (19) aufweist;
wobei die erste Kernkörperbaugruppe (16) einen ersten bewegbaren Eisenkern (161), einen zweiten Hülsenabschnitt (162) und einen ersten Dichtungsabschnitt (163) aufweist; der zweite Hülsenabschnitt (162) fest oder positionsbegrenzt mit dem ersten bewegbaren Eisenkern (161) verbunden ist; ein unteres Ende des zweiten Hülsenabschnitts (162) fest oder positionsbegrenzt mit dem ersten Dichtungsabschnitt (163) verbunden ist, das erste elastische Element (18) am ersten Dichtungsabschnitt (163) anliegt, die zweite Kernkörperbaugruppe (17) einen zweiten bewegbaren Eisenkern (171) und einen zweiten Dichtungsabschnitt (172) aufweist; ein unteres Ende des zweiten bewegbaren Eisenkerns (171) fest oder positionsbegrenzt mit dem zweiten Dichtungsabschnitt (172) verbunden ist; eine Aussparung (171a) am ersten bewegbaren Eisenkern (161) und/oder am zweiten bewegbaren Eisenkern (171) definiert ist; zumindest ein Teil des zweiten elastischen Elements (19) sich in der Aussparung (171a) befindet, ein Ende des zweiten elastischen Elements (19) am ersten bewegbaren Eisenkern (161) und ein anderes Ende des zweiten elastischen Elements (19) am zweiten bewegbaren Eisenkern (171) anliegt;
wenn die elektromagnetische Antriebsvorrichtung (10) mit Energie versorgt wird, ist der erste bewegbare Eisenkern (161) dafür ausgelegt, sich mit dem zweiten Hülsenabschnitt (162) und dem ersten Dichtungsabschnitt (163) axial entlang einer ersten Hülsenwand (15c) des ersten Hülsenabschnitts (15) aufwärts zu bewegen, so dass sich der erste Dichtungsabschnitt (163) von der ersten Ventilöffnung (101) wegbewegt, der zweite bewegbare Eisenkern (171) sich mit dem zweiten Dichtungsabschnitt (172) von der zweiten Ventilöffnung (102) wegbewegt, der erste bewegbare Eisenkern (161) am zweiten bewegbaren Eisenkern (171) anliegt und der erste bewegbare Eisenkern (161) und der zweite bewegbare Eisenkern (171) sich bis in die Nähe des feststehenden Eisenkerns (13) bewegen; und
wenn die elektromagnetische Antriebsvorrichtung (10) nicht mit Energie versorgt wird, ist der erste Dichtungsabschnitt (163) dafür ausgelegt, die erste Ventilöffnung (101) zu schließen, und der zweite Dichtungsabschnitt (172) ist dafür ausgelegt, die zweite Ventilöffnung (102) zu schließen, ein erster Abstand (L1) ist zwischen dem ersten bewegbaren Eisenkern (161) und dem zweiten bewegbaren Eisenkern (171) gebildet, ein zweiter Abstand (L2) ist zwischen dem ersten bewegbaren Eisenkern (161) und einem geschlossenen Ende (15a) des ersten Hülsenabschnitts (15) gebildet, und der erste Abstand (L1) ist kleiner als der zweite Abstand (L2).

2. Gasproportionalventil nach Anspruch 1, wobei die elektromagnetische Antriebsvorrichtung (10) darüber hinaus einen Magnetleiter (14) aufweist; der Magnetleiter (14) auf eine Außenumfangswand des ersten Hülsenabschnitts (15) aufgeschoben ist, der Magnetleiter (14) einen vertikalen Abschnitt (141) und einen Flanschabschnitt (142) aufweist, das Gasproportionalventil darüber hinaus ein Gehäuse (11) und ein Spulenbauteil (12) aufweist, das Spulenbauteil (12) einen Rahmen (122) aufweist, eine Innenwand des vertikalen Abschnitts (141) an der Außenumfangswand anliegt, eine Außenwand des vertikalen Abschnitts (141) am Rahmen (122) anliegt, der Flanschabschnitt (142) zwischen dem Rahmen (122) und dem Gehäuse (11) eingespannt ist, ein oberes Ende des Flanschabschnitts (142) am Rahmen (122) anliegt und ein unteres Ende des Flanschabschnitts (142) an einem unteren Abschnitt des Gehäuses (11) anliegt.

3. Gasproportionalventil nach Anspruch 1, wobei die elektromagnetische Antriebsvorrichtung (10) darüber hinaus eine zweite Aufnahmekammer (A2) aufweist, der erste Hülsenabschnitt (15) im Wesentlichen die zweite Aufnahmekammer (A2) definiert und zumindest ein Teil der ersten Kernkörperbaugruppe (16) dafür ausgelegt ist, sich entlang einer ersten Hülsenwand (15c) in der zweiten Aufnahmekammer (A2) axial aufwärts und abwärts zu bewegen, der erste bewegbare Eisenkern (161), der zweite Hülsenabschnitt (162) und der erste Dichtungsabschnitt (163) im Wesentlichen die erste Aufnahmekammer (A1) definieren, zumindest ein Teil des zweiten bewegbaren Eisenkerns (171) sich in der ersten Aufnahmekammer (A1) befindet und dafür ausgelegt ist, sich entlang einer zweiten Hülsenwand des zweiten Hülsenabschnitts (162) axial aufwärts und abwärts zu bewegen.

4. Gasproportionalventil nach Anspruch 3, wobei der zweite bewegbare Eisenkern (171) einen Körperabschnitt (171a) und einen Ventilschaft (172a) aufweist, der Körperabschnitt (171a) mit dem Ventilschaft (172a) einstückig ausgeführt ist oder der Körperabschnitt (171a) mit dem Ventilschaft (172a) fest verbunden ist, der erste Dichtungsabschnitt (163) eine Öffnung aufweist, zumindest ein Teil des Ventilschafts (172a) sich von der Öffnung nach außen erstreckt, der Ventilschaft (172a) einen Schaftkopf (1721a) aufweist und der Schaftkopf (1721a) fest oder positionsbegrenzt mit dem zweiten Dichtungsabschnitt (172) verbunden ist.

5. Gasproportionalventil nach Anspruch 3, wobei der erste Hülsenabschnitt (15) das geschlossene Ende (15a) und ein offenes Ende (15b) aufweist, ein Erweiterungsabschnitt (151b) am offenen Ende (15b) vorgesehen ist, die elektromagnetische Antriebsvorrichtung (10) darüber hinaus ein Gehäuse (11), ein Spulenbauteil (12) und ein Dichtungselement aufweist, ein Innenloch (121) am Spulenbauteil (12) definiert ist, zumindest ein Teil des ersten Hülsenabschnitts (15) sich in dem Innenloch (121) befindet und die erste Hülsenwand (15c) auf den ersten bewegbaren Eisenkern (161) und zumindest einen Teil einer Außenumfangswand des zweiten Hülsenabschnitts (162) aufgeschoben ist, ein Teil des Erweiterungsabschnitts (151b), der dem zweiten Hülsenabschnitt (162) relativ nahe ist, zwischen dem Gehäuse (11) und dem ersten elastischen Element (18) eingespannt ist, und ein oberes Ende des Teils am Gehäuse (11) und ein unteres Ende des Teils am ersten elastischen Element (18) anliegt, ein anderer Teil des Erweiterungsabschnitts (151b), der vom zweiten Hülsenabschnitt (162) relativ weit weg ist, zwischen dem Gehäuse (11) und dem Dichtungselement eingespannt ist, ein oberes Ende des anderen Teils am Gehäuse (11) anliegt und ein unteres Ende des anderen Teils am Dichtungselement anliegt.

6. Gasproportionalventil nach Anspruch 1, wobei eine elastische Kraft des ersten elastischen Elements (18) größer als eine elastische Kraft des zweiten elastischen Elements (19) ist.

7. Gasproportionalventil nach einem der Ansprüche 1 bis 6, wobei das Gasproportionalventil darüber hinaus ein Gehäuse (11) und ein Spulenbauteil (12) aufweist, ein Innenloch (121) am Spulenbauteil (12) definiert ist, zumindest ein Teil des feststehenden Eisenkerns (13) sich in dem Innenloch (121) befindet, der feststehende Eisenkern (13) einem oberen Abschnitt des Gehäuses (11) relativ nahe ist, der feststehende Eisenkern (13) fest oder positionsbegrenzt mit dem Gehäuse (11) verbunden ist, der feststehende Eisenkern (13) einen Aussparungsabschnitt (131) aufweist, der Aussparungsabschnitt (131) eine Bodenwand (131a) und eine Seitenwand (131b) aufweist, das geschlossenen Ende (15a) sich im Aussparungsabschnitt (131) befindet und das geschlossene Ende (15a) der Bodenwand (131a) relativ nahe ist oder an ihr anliegt, und die Seitenwand (131b) der ersten Hülsenwand (15c) relativ nahe ist oder an ihr anliegt.

8. Gasproportionalventil nach einem der Ansprüche 1 bis 6, wobei der erste bewegbare Eisenkern (161) und der zweite bewegbare Eisenkern (171) aus einem weichmagnetischen Material bestehen.

9. Gasproportionalventil nach einem der Ansprüche 1 bis 6, wobei das Gasproportionalventil darüber hinaus eine Proportionalregelungsvorrichtung (20) und eine Differentialdruck-Regelungsvorrichtung (30) aufweist, die Proportionalregelungsvorrichtung (20) ein Gehäuseelement (29), einen feststehenden Eisenkern (21), einen bewegbaren Eisenkern (23), einen Regelungsventilschaft (22) und eine Membranbaugruppe (24) aufweist, der bewegbare Eisenkern (23) sich über dem feststehenden Eisenkern (21) befindet, ein unteres Ende des Regelungsventilschafts (22) fest oder positionsbegrenzt mit der Membranbaugruppe (24) verbunden ist, der Regelungsventilschaft (22) mit dem bewegbaren Eisenkern (23) fest verbunden oder einstückig mit diesem ausgeführt ist, der bewegbare Eisenkern (23) dafür ausgelegt ist, sich mit dem Regelungsventilschaft (22) bis in die Nähe des feststehenden Eisenkerns (21) oder von diesem weg zu bewegen, die Proportionalregelungsvorrichtung (20) darüber hinaus einen Regelungsmechanismus (40) aufweist, das Gasproportionalventil darüber hinaus eine dritte Ventilöffnung (103) aufweist, und die Membranbaugruppe (24) dafür ausgelegt ist, sich bis in die Nähe der dritten Ventilöffnung oder von dieser weg zu bewegen.

10. Gasproportionalventil nach Anspruch 9, wobei in dem Körper (1) ein Strömungsdurchgang (151) definiert ist, der Strömungsdurchgang (151) einen ersten Strömungsdurchgang (151a), einen zweiten Strömungsdurchgang (151b) und einen dritten Strömungsdurchgang (151c) aufweist, der erste Strömungsdurchgang (151a) nahe an der elektromagnetischen Antriebsvorrichtung (10) liegt, ein Ende des ersten Strömungsdurchgangs (151a) in Verbindung mit der zweiten Ventilöffnung (102) ist, ein Ende des zweiten Strömungsdurchgangs (151b) in Verbindung mit der dritten Ventilöffnung (103) ist, der dritte Strömungsdurchgang (151c) nahe an der Differentialdruck-Regelungsvorrichtung (30) liegt, ein Ende des dritten Strömungsdurchgangs (151c) in Verbindung mit einer Rückdruckkammer (31) der Differentialdruck-Regelungsvorrichtung (30) ist, und der erste Strömungsdurchgang (151a), der zweite Strömungsdurchgang (151b) und der dritte Strömungsdurchgang (151c) miteinander in Verbindung sind.

## Revendications

1. Soupape proportionnelle à gaz, comprenant un corps (1), une première ouverture de soupape (101), une deuxième ouverture de soupape (102) et un dispositif d'entraînement électromagnétique (10), le dispositif d'entraînement électromagnétique (10) comprenant un noyau de fer fixe (13), une première section de douille (15), un premier ensemble de corps de noyau (16), un deuxième ensemble de corps de noyau (17), un premier élément élastique (18) et un deuxième élément élastique (19) ;
le premier ensemble de corps de noyau (16) comprenant un premier noyau de fer mobile (161), une deuxième section de douille (162) et une première section d'étanchéité (163) ; la deuxième section de douille (162) étant reliée de manière fixe ou limitée en position au premier noyau de fer mobile (161) ; une extrémité inférieure de la deuxième section de douille (162) est reliée de manière fixe ou limitée en position à la première section d'étanchéité (163), le premier élément élastique (18) s'appuie contre la première section d'étanchéité (163), le deuxième ensemble de corps de noyau (17) comprend un deuxième noyau de fer mobile (171) et une deuxième section d'étanchéité (172) ; une extrémité inférieure du deuxième noyau de fer mobile (171) est reliée de manière fixe ou limitée en position à la deuxième section d'étanchéité (172) ; un évidement (171a) est défini au niveau du premier noyau de fer mobile (161) et/ou du deuxième noyau de fer mobile (171) ; au moins une partie du deuxième élément élastique (19) est située dans l'évidement (171a), une extrémité du deuxième élément élastique (19) s'appuie contre le premier noyau de fer mobile (161) et une autre extrémité du deuxième élément élastique (19) s'appuie contre le deuxième noyau de fer mobile (171) ;
lorsque le dispositif d'entraînement électromagnétique (10) est alimenté en énergie, le premier noyau de fer mobile (161) est conçu pour se déplacer avec la deuxième section de douille (162) et la première section d'étanchéité (163) axialement vers le haut le long d'une première paroi de douille (15c) de la première section de douille (15), de sorte que la première section d'étanchéité (163) s'éloigne de la première ouverture de soupape (101), le deuxième noyau de fer mobile (171) se déplace avec la deuxième section d'étanchéité (172) pour s'éloigner de la deuxième ouverture de soupape (102), le premier noyau de fer mobile (161) s'appuie contre le deuxième noyau de fer mobile (171) et le premier noyau de fer mobile (161) et le deuxième noyau de fer mobile (171) se déplacent jusqu'à proximité du noyau de fer fixe (13) ; et
lorsque le dispositif d'entraînement électromagnétique (10) n'est pas alimenté en énergie, la première section d'étanchéité (163) est conçue pour fermer la première ouverture de soupape (101), et la deuxième section d'étanchéité (172) est conçue pour fermer la deuxième ouverture de soupape (102), une première distance (L1) est formée entre le premier noyau de fer mobile (161) et le deuxième noyau de fer mobile (171), une deuxième distance (L2) est formée entre le premier noyau de fer mobile (161) et une extrémité fermée (15a) de la première section de douille (15), et la première distance (L1) est inférieure à la deuxième distance (L2).

2. La soupape proportionnelle à gaz selon la revendication 1, sachant que le dispositif d'entraînement électromagnétique (10) comprend en outre un conducteur magnétique (14) ; le conducteur magnétique (14) est enfilé sur une paroi périphérique extérieure de la première section de douille (15), le conducteur magnétique (14) comprend une section verticale (141) et une section de bride (142), la soupape proportionnelle à gaz comprend également un boîtier (11) et un composant de bobine (12), le composant de bobine (12) comprend un cadre (122), une paroi intérieure de la section verticale (141) s'appuie contre la paroi périphérique extérieure, une paroi extérieure de la section verticale (141) s'appuie contre le cadre (122), la section de bride (142) est serrée entre le cadre (122) et le boîtier (11), une extrémité supérieure de la section de bride (142) s'appuie contre le cadre (122) et une extrémité inférieure de la section de bride (142) s'appuie contre une section inférieure du boîtier (11).

3. La soupape proportionnelle à gaz selon la revendication 1, sachant que le dispositif d'entraînement électromagnétique (10) comprend en outre une deuxième chambre de réception (A2), la première section de douille (15) définit essentiellement la deuxième chambre de réception (A2) et au moins une partie du premier ensemble de corps de noyau (16) est conçue pour se déplacer axialement vers le haut et vers le bas le long d'une première paroi de douille (15c) dans la deuxième chambre de réception (A2), le premier noyau de fer mobile (161), la deuxième section de douille (162) et la première section d'étanchéité (163) définissent essentiellement la première chambre de réception (A1), au moins une partie du deuxième noyau de fer mobile (171) est située dans la première chambre de réception (A1) et est conçue pour se déplacer axialement vers le haut et vers le bas le long d'une deuxième paroi de douille de la deuxième section de douille (162).

4. La soupape proportionnelle à gaz selon la revendication 3, sachant que le deuxième noyau de fer mobile (171) comprend une section de corps (171a) et une tige de soupape (172a), la section de corps (171a) est réalisée d'un seul tenant avec la tige de soupape (172a) ou la section de corps (171a) est reliée de manière fixe à la tige de soupape (172a), la première section d'étanchéité (163) comprend une ouverture, au moins une partie de la tige de soupape (172a) s'étend vers l'extérieur à partir de l'ouverture, la tige de soupape (172a) comprend une tête de tige (1721a) et la tête de tige (1721a) est reliée de manière fixe ou limitée en position à la deuxième section d'étanchéité (172).

5. La soupape proportionnelle à gaz selon la revendication 3, sachant que la première section de douille (15) comprend l'extrémité fermée (15a) et une extrémité ouverte (15b), une section d'extension (151b) est prévue au niveau de l'extrémité ouverte (15b), le dispositif d'entraînement électromagnétique (10) comprend en outre un boîtier (11), un composant de bobine (12) et un élément d'étanchéité, un trou intérieur (121) est défini au niveau du composant de bobine (12), au moins une partie de la première section de douille (15) est située dans le trou intérieur (121) et la première paroi de douille (15c) est enfilée sur le premier noyau de fer mobile (161) et au moins une partie d'une paroi périphérique extérieure de la deuxième section de douille (162), une partie de la section d'extension (151b), qui est relativement proche de la deuxième section de douille (162), est serrée entre le boîtier (11) et le premier élément élastique (18), et une extrémité supérieure de la partie s'appuie contre le boîtier (11) et une extrémité inférieure de la partie s'appuie contre le premier élément élastique (18), une autre partie de la section d'extension (151b), qui est relativement éloignée de la deuxième section de douille (162), est serrée entre le boîtier (11) et l'élément d'étanchéité, une extrémité supérieure de l'autre partie s'appuie contre le boîtier (11) et une extrémité inférieure de l'autre partie s'appuie contre l'élément d'étanchéité.

6. La soupape proportionnelle à gaz selon la revendication 1, sachant qu'une force élastique du premier élément élastique (18) est supérieure à une force élastique du deuxième élément élastique (19).

7. La soupape proportionnelle à gaz selon l'une des revendications 1 à 6, sachant que la soupape proportionnelle à gaz comprend en outre un boîtier (11) et un composant de bobine (12), un trou intérieur (121) est défini au niveau du composant de bobine (12), au moins une partie du noyau de fer fixe (13) est située dans le trou intérieur (121), le noyau de fer fixe (13) est relativement proche d'une section supérieure du boîtier (11), le noyau de fer fixe (13) est relié de manière fixe ou limitée en position au boîtier (11), le noyau de fer fixe (13) comprend une section d'évidement (131), la section d'évidement (131) comprend une paroi de fond (131a) et une paroi latérale (131b), l'extrémité fermée (15a) est située dans la section d'évidement (131) et l'extrémité fermée (15a) est relativement proche de la paroi de fond (131a) ou s'appuie contre celle-ci, et la paroi latérale (131b) est relativement proche de la première paroi de douille (15c) ou s'appuie contre celle-ci.

8. La soupape proportionnelle à gaz selon l'une des revendications 1 à 6, sachant que le premier noyau de fer mobile (161) et le deuxième noyau de fer mobile (171) sont constitués d'un matériau magnétique doux.

9. La soupape proportionnelle à gaz selon l'une des revendications 1 à 6, sachant que la soupape proportionnelle à gaz comprend en outre un dispositif de régulation proportionnelle (20) et un dispositif de régulation de pression différentielle (30), le dispositif de régulation proportionnelle (20) comprend un élément de boîtier (29), un noyau de fer fixe (21), un noyau de fer mobile (23), une tige de soupape de régulation (22) et un ensemble de membrane (24), le noyau de fer mobile (23) est situé au-dessus du noyau de fer fixe (21), une extrémité inférieure de la tige de soupape de régulation (22) est reliée de manière fixe ou limitée en position à l'ensemble de membrane (24), la tige de soupape de régulation (22) est reliée de manière fixe au noyau de fer mobile (23) ou est réalisée d'un seul tenant avec celui-ci, le noyau de fer mobile (23) est conçu pour se déplacer avec la tige de soupape de régulation (22) jusqu'à proximité du noyau de fer fixe (21) ou s'éloigner de celui-ci, le dispositif de régulation proportionnelle (20) comprend en outre un mécanisme de régulation (40), la soupape proportionnelle à gaz comprend en outre une troisième ouverture de soupape (103), et l'ensemble de membrane (24) est conçu pour se déplacer jusqu'à proximité de la troisième ouverture de soupape ou s'éloigner de celle-ci.

10. La soupape proportionnelle à gaz selon la revendication 9, sachant qu'un passage d'écoulement (151) est défini dans le corps (1), le passage d'écoulement (151) comprend un premier passage d'écoulement (151a), un deuxième passage d'écoulement (151b) et un troisième passage d'écoulement (151c), le premier passage d'écoulement (151a) étant situé à proximité du dispositif d'entraînement électromagnétique (10), une extrémité du premier passage d'écoulement (151a) est en communication avec la deuxième ouverture de soupape (102), une extrémité du deuxième passage d'écoulement (151b) est en communication avec la troisième ouverture de soupape (103), le troisième passage d'écoulement (151c) est situé à proximité du dispositif de régulation de pression différentielle (30), une extrémité du troisième passage d'écoulement (151c) est en communication avec une chambre de contre-pression (31) du dispositif de régulation de pression différentielle (30), et le premier passage d'écoulement (151a), le deuxième passage d'écoulement (151b) et le troisième passage d'écoulement (151c) sont en communication les uns avec les autres.
